# FASCICULE DE BREVET EUROPEEN

(11) **EP 0 426 518 B1**
(45) Date de publication et mention de la délivrance du brevet: **18.01.1995**
(21) Numéro de dépôt: 90402796.8
(22) Date de dépôt: 08.10.1990
(51) Int. Cl.: H04J 14/08, H04L 12/28, G01V 1/22

(54) **Méthode et dispositif de transmission à grand débit suivant un mode quasi-asynchrone**
Übertragungsverfahren und -anordnung für hohe Datenraten nach dem asynchronen Mode-Prinzip
Method and circuit for the transmission of high speed data according to a quasi asynchronous mode

(30) Priorité: 30.10.1989 FR 8914346
(43) Date de publication de la demande: 08.05.1991
(73) Titulaire: INSTITUT FRANCAIS DU PETROLE, 92502 Rueil-Malmaison (FR)
(72) Inventeur: Beauducel, Claude, F-60119 Henonville (FR)

(56) Documents cités:
- EP-A- 0 275 781
- FR-A- 2 597 225
- US-A- 4 628 494

## Description

La présente invention concerne une méthode et un dispositif de transmission à grand débit vers un même poste central, suivant un mode quasi-asynchrone, des données provenant d'une pluralité d'appareils d'acquisition de signaux et connectés à celui-ci par des voies de transmission communes.

La méthode et le dispositif conviennent particulièrement pour la transmission séquentielle vers un poste central, de données provenant d'un nombre important d'appareils d'acquisition partageant des voies de transmission communes. C'est le cas notamment des systèmes de transmission utilisés dans le domaine de la prospection sismique marine. Un nombre souvent très important de récepteurs sismiques tels que des hydrophones par exemple, sont répartis à intervalles réguliers tout le long d'une gaîne souple de très grande longueur ou flûte sismique, constituée par l'interconnexion d'une pluralité de sections. La flûte sismique est remorquée derrière un navire évoluant le long d'un profil sismique à explorer et l'on réalise des cycles successifs d'émission de signaux acoustiques et de réception des signaux renvoyés par les discontinuités du sous-sol en réponse aux signaux émis. Les signaux captés par les récepteurs sismiques au cours de chaque cycle, sont, dans les flûtes sismiques récentes, collectés par des appareils d'acquisition disposés dans des boitiers intercalés entre les sections successives de la flûte, échantillonnés, numérisés et mémorisés. Les différents appareils sont reliés par des voies de transmission communes courant tout le long de la flûte à un poste ou laboratoire central d'enregistrement situé sur le navire. Une ou plusieurs voies servent à la transmission d'ordres codés adressés aux différents appareils par un laboratoire central sur le navire. Une telle méthode et un tel dispositif sont décrits dans EP-A-0 275 781.

Une ou plusieurs voies sont utilisées pour la transmission vers celui-ci des signaux émis par les différents appareils en réponse aux ordres recus. A l'issue de chaque cycle d'émission-réception, les différents appareils recoivent des ordres pour transmettre séquentiellement au laboratoire, les données qu'ils ont mémorisées. De telles flûtes sismiques sont décrites par exemple dans les brevets français No. 2 471 088 ou 2 590 684.

La tendance actuelle dans le domaine de la géophysique est à l'allongement des flûtes sismiques. L'accroissement corrélatif du nombre de récepteurs permet comme il est bien connu, d'affiner les profils sismiques que l'on peut établir à partir des enregistrements centralisés au laboratoire. Le nombre de signaux à transmettre augmentant, il faut accroître le débit des voies de transmission employées pour limiter le plus possible les intervalles entre les cycles successifs d'émission et de réception. Si l'on se fixe comme objectif la construction d'une flûte sismique capable de fournir 1000 à 1500 traces distinctes d'enregistrement, il faut s'imposer des débits de transmission de l'ordre de 30 à 40 Mbits/s. La méthode la plus simple consiste essentiellement à utiliser des voies de transmission rapides (câbles coaxiaux ou fibres optiques) et à augmenter la fréquence des signaux d'horloge rythmant la transmission séquentielle des données. Mais ceci se traduit par une progression rapide des coûts de fabrication car il faut inclure dans les nombreux appareils d'acquisition de la flûte, des composants électroniques capables de performances élevées et donc coûteux, surtout si l'on cherche à limiter la consommation électrique globale. De ce fait, on cherche aussi à optimiser le débit de transmission des signaux sismiques proprement dits.

Les signaux numérisés à transmettre sont généralement incorporés dans une trame de structure bien établie comportant plusieurs cellules servant à identifier le numéro ou signature de l'appareil d'acquisition concerné et la nature de l'information numérisée incluse dans la trame, de manière que l'ensemble de réception dans le laboratoire central puisse séparer et classer les signaux séquentiellement transmis.

Une méthode connue qui est appliquée et décrite dans le brevet français précité No. 2 471 088 consiste à utiliser un code de transmission adapté à la transmission d'un signal d'horloge et à munir chaque appareil d'acquisition dans la flûte de modules d'émission et de réception. Tous les mots numériques codés transitant sur les voies de transmission, sont systématiquement décodés afin que chaque appareil puisse déterminer s'il est bien concerné et dans ce cas, inclure dans la trame en transit la donnée numérisée qui convient. Le positionnement des mots numériques à la suite les uns des autres, est donc fait de façon très rigoureuse. A la sortie de chaque appareil d'acquisition, les mots numériques sont de nouveau codés avant leur application sur les voies de transmission. La multiplicité des contrôles effectués tous le long des voies de transmission a pour effet de limiter la vitesse de centralisation des signaux sismiques. La méthode précédente convient donc très bien pour des débits de transmission pas trop importants.

La méthode selon l'invention permet d'éviter les inconvénients ci-dessus mentionnés, dans la transmission à grand débit de données numérisées entre une pluralité d'appareils d'acquisition et un même poste central auquel ils sont connectés par au moins une première voie de transmission de signaux de contrôle et au moins une seconde voie de transmission de données à débit de transmission plus élevé que celui de ladite première voie, ces appareils pouvant être par exemple ceux employés dans un système de transmission sismique. La méthode selon l'invention comporte l'utilisation d'au moins un code de transmission tel que les signaux de contrôle et les données transmises sont superposées respectivement à un premier signal d'horloge et à un second signal d'horloge de fréquence plus élevée que celle du premier signal d'horloge, l'acquisition et la mémorisation des données étant effectuées en accord avec le premier signal d'horloge. Elle est caractérisée en ce qu'elle comporte l'allocation sélective à chaque appareil d'acquisition, d'un intervalle de temps de transmission de durée déterminée, et l'émission permanente du second signal d'horloge sur ladite voie de transmission de données, chacune des transmissions comportant successivement
- l'adressage en séquence à tous les appareils d'acquisition, de signaux de contrôle indicatifs chacun de l'instant de début de l'intervalle de transmission attribué respectivement à chaque appareil d'acquisition et,
- à la réception d'un signal de contrôle qui lui correspond, la lecture d'une donnée mémorisée en synchronisme avec le second signal d'horloge et sa transmission sur ladite voie de transmission de données à partir d'un instant compatible avec le signal d'horloge utilisé pour la lecture de ladite donnée.

La méthode s'applique par exemple à un système de transmission où la seconde voie de transmision au moins est à fibre optique.

Le dispositif pour la mise en oeuvre de la méthode permet la transmission à grand débit des données entre une pluralité d'appareils d'acquisition de données adaptés chacun à collecter, échantillonner, numériser, mémoriser des signaux, et à les coder en accord avec un signal de référence et un poste de centralisation pourvu de moyens pour engendrer des signaux de contrôle codés en fonction d'un premier signal d'horloge et pouvant être adressés sélectivement aux différents appareils d'acquisition, lesquels sont connectés au poste central par en ensemble de liaison commun comportant au moins une première voie de transmission desdits signaux de contrôle et au moins une seconde voie de transmission à débit de transmission plus élevé que celui de la première voie, qui est reliée à des moyens d'émission d'un second signal d'horloge. Le dispositif est caractérisé en ce qu'il comporte des ensembles de transmission associés respectivement aux différents appareils d'acquisition et comportant chacun
- des moyens de restitution en permanence du second signal d'horloge émis sur la seconde voie,
- des moyens de décodage sur la première voie des signaux de contrôle spécifiques indiquant le début de l'intervalle de temps prédéterminé affecté audit appareil d'acquisition pour l'émission des signaux mémorisés,et
- des moyens d'émission desdits signaux mémorisés en synchronisme avec le second signal d'horloge issu des moyens de restitution, durant ledit intervalle de temps prédéterminé.

Suivant un mode de réalisation, la seconde voie de transmission est une fibre optique connectée à chaque appareil d'acquisition par des moyens de conversion électrique/optique.

Suivant un autre mode de réalisation, chaque ensemble de transmission comporte un ensemble logique de commande adapté à contrôler l'acquisition des données en synchronisme avec le premier signal d'horloge, un organe de mémorisation des signaux codés issus de l'appareil d'acquisition correspondant, et les moyens d'émission comportent des moyens de lecture de l'organe de mémorisation en synchronisme avec le second signal d'horloge et des moyens de commutation commandés par l'ensemble logique de commande, pour connecter par intermittence ledit organe de mémorisation à la seconde voie de transmission.

Le dispositif peut encore comporter un élément de codage pour appliquer aux signaux à transmettre un code particulier de transmission.

La méthode et le dispositif selon l'invention permettent d'utiliser deux vitesses d'horloge très différentes pour l'acquisition des données et la transmission des ordres d'une part et pour la transmission des données d'autre part, sans qu'il soit nécessaire de les synchroniser, ceci étant obtenu en autorisant un certain décalage de temps dans la transmission à l'intérieur d'une fenêtre de transmission imposée. On peut réduire ainsi la part d'éléments électroniques très performants nécessaires pour construire un système de transmission à débit élevé.

D'autres caractéristiques et avantages de la méthode et du dispositif selon l'invention apparaîtront mieux à la lecture de la description ci-après d'un mode de réalisation décrit à titre d'exemple non limitatif, appliqué à une flûte sismique marine, et en se référant aux dessins annexés où:
- la Fig.1 représente schématiquement une flûte sismique marine remorquée en immersion;
- la Fig.2 montre schématiquement un boitier intercalé entre deux sections quelconques d'une flûte sismique, contenant un ensemble de transmission et ses connexions avec les voies de transmission;
- les Fig. 3 à 7 sont des chronogrammes montrant différents codes utilisés pour le codage des données numérisées à transmettre; et
- la Fig. 8 est un chronogramme montrant la succession des intervalles de temps respectifs ou fenêtres affectés aux différents appareils d'acquisition pour leur transmission.

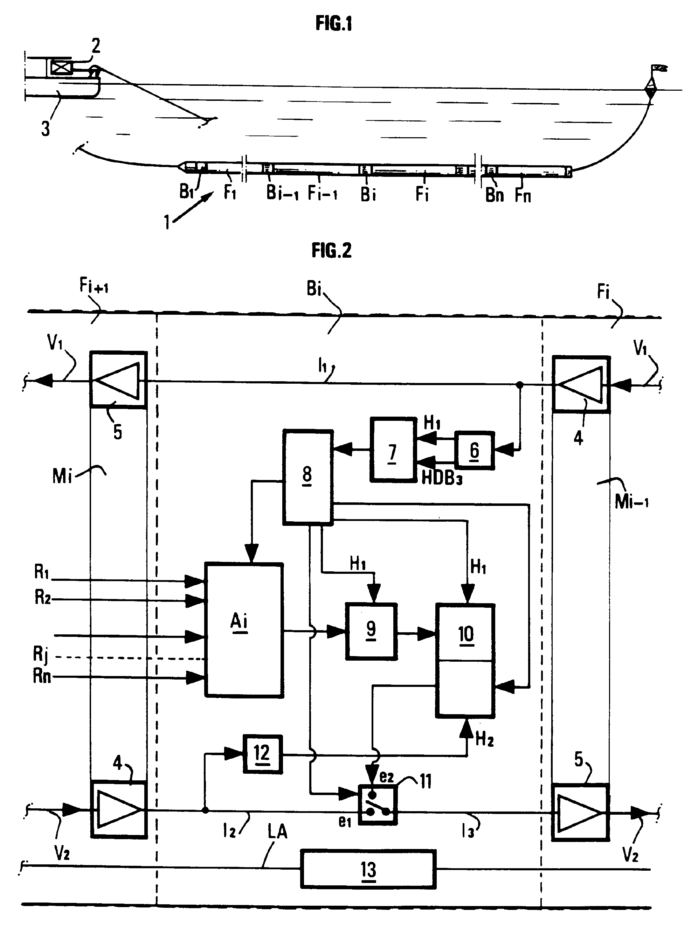

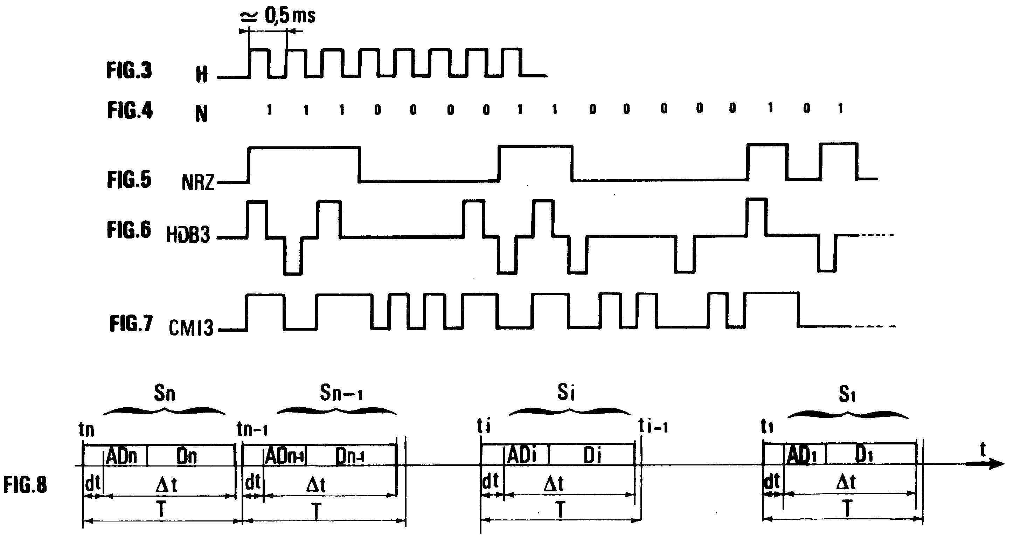

Une flûte sismique marine telle que celles décrites dans les brevets francais précités, comporte généralement (Fig.1) une gaîne tubulaire souple 1 de grande longueur constituée d'un nombre souvent important de sections successives F1, Fi-1...Fi...Fn interconnectées les unes aux autres par l'intermédiaire de boitiers d'interconnexion B1 à Bn. Des récepteurs sismiques (non représentés) sont disposés tout le long de la gaîne. Les récepteurs R1, R2...Rj...Rm d'une même section Fi (Fig.2) transmettent les signaux qu'ils captent à un appareil d'acquisition sismique Ai disposé dans un boitier d'interconnexion Bi à une extrémité de la section Fi. Tout le long de la flûte sismique courent des voies de transmission communes reliant les différents dispositifs d'acquisition à un poste ou laboratoire central 2 disposé sur un navire 3 tractant la flûte en immersion (Fig.1). Une voie V1 est réservée à la transmission d'ordres codés adressés aux différents appareils d'acquisition Ai le long de la flûte par le laboratoire central 2. Une seconde voie V2 est affectée à la transmission vers celui-ci des signaux émis par les différents appareils d'acquisition en réponse aux ordres reçus. Dans le cas où le débit de données transitant par la voie V2 est très important (de l'ordre de plusieurs dizaines de Mbits/s), on utilise de préférence une ou plusieurs fibres optiques. Le débit des signaux le long de la voie V1 est généralement très inférieur (de l'ordre de quelques Mbits/s par exemple). On peut utiliser pour la réaliser une ou plusieurs fibres optiques ou éventuellement des lignes bifilaires, si le débit requis n'est pas trop grand. On réalise l'interconnexion des voies V1 et V2 avec les conducteurs électriques dans chaque boitier d'extrémité Bi, au moyen de modules d'adaptation d'un type connu Mi-1,Mi... pourvu chacun d'un récepteur 4 et d'un émetteur 5. Dans le cas où les voies V1 et/ou V2 sont des fibres optiques, ces modules sont adaptés à faire les transformations des signaux optiques en signaux électriques pour leur traitement par les éléments électroniques à l'intérieur de chacun des boitiers Bi, ou inversement pour la traduction des signaux électriques en signaux optiques pour leur émission sur les fibres, comme on va le voir ci-après.

Le boitier d'interconnexion Bi représenté à la Fig.2 comporte un élément 6 connecté à la sortie du récepteur 4 du module Mi-1, adapté à extraire le signal d'horloge rythmant la transmission des signaux codés provenant du laboratoire central 2 (Fig.1). Le code de transmission utilisé est du type HDB3 bien connu des spécialistes. A titre d'exemple, les Fig 3 à 6 montrent la traduction codée en HDB3 d'un mot numérique binaire. Sur deux sorties distinctes, l'élément 6 produit le signal d'horloge H1 et les mots numériques reçus sous leur forme codée (HDB3). A partir de ces signaux, un décodeur spécialisé 7 reproduit les mots de commande reçus du laboratoire central 2. Les signaux décodés sont appliqués à un ensemble logique de commande 8 adapté à piloter l'acquisition synchrone avec l'horloge H1 des signaux sismiques provenant des différents récepteurs R1 à Rn, par l'appareil d'acquisition Ai. Pour les besoins de la transmission sur les fibres optiques, on code les données numérisées issues de l'appareil d'acquisition Ai suivant un code approprié tel que le code CMI3 également bien connu des spécialistes des transmissions. La Fig.7 montre un exemple de mot numérique codé suivant ce code CMI3.

Pour les données converties dans ce code CMI3 par un convertisseur spécialisé 9, sont rangées dans une mémoire 10 du type FIFO par exemple. La traduction dans le code CMI3 et le rangement des mots codés dans la mémoire 10 sont pilotés par le signal d'horloge H1.

Les signaux codés issus du récepteur 4 du module Mi-1 sont directement appliqués à l'émetteur 5 du module suivant Mi par une ligne l1. Ceux issus du récepteur 4 dans le module Mi sont appliqués à une borne d'entrée e1 d'un commutateur 11 à deux positions par une ligne l2. La seconde borne d'entrée de celui-ci est connectée à la sortie de lecture de la mémoire 10. Les signaux issus du commutateur 11 sont appliqués à l'entrée de l'émetteur 5 du module Mi-1 par une ligne l3. Le commutateur 11 est actionné par un signal issu de l'ensemble logique 8.

Les signaux transmis sur la voie V2 sont rythmés par un signal d'horloge H2 de fréquence très supérieure à celle du signal d'horloge H1. La fréquence du signal H2 est choisie par exemple égale 32,8 MHz alors que celle de H1 est 2,56 MHz. Le signal d'horloge H2 est émis par une horloge (non représentée) disposée par exemple dans le dernier boitier en fin de flûte et donc en tête de la voie V2 de transmission des données.

La sortie du récepteur 4 du module Mi est aussi connectée en permanence à un élément 12 adapté à extraire des signaux transmis sur la voie V2, le signal d'horloge H2. Ce signal est appliqué à l'entrée "horloge" de la mémoire 10. La lecture des données rangées dans la mémoire 10 à la fréquence imposée par le second signal d'horloge H2, est commandée par un signal approprié émanant de l'ensemble logique de commande 8.

Le boitier Bi contient aussi un bloc d'alimentation électrique 13 connecté à un générateur électrique sur le navire par des lignes d'alimentation LA.

Les éléments 6 à 12 constituent l'ensemble de transmission TRi associé à l'appareil d'acquisition Ai.

La méthode de transmission quasi-asynchrone selon l'invention consiste essentiellement à effectuer des cycles successifs d'interrogation durant lesquels tous les boitiers le long de la flûte depuis le plus éloigné Bn jusqu'au plus proche B1, sont interrogés séquentiellement. Au cours d'un même cycle, tous les boitiers Bi recoivent des ordres de transmission décalés les uns par rapport aux autres d'un intervalle de temps T supérieur à la durée standard Δt de transmission des échantillons de signaux. A la réception d'un ordre de transmission désignant un boitier quelconque Bi, (Fig. 8, instant ti) l'élément logique de commande correspondant 8, synchronisé par l'horloge H1, émet un signal de lecture de la mémoire 10 où sont rangés les échantillons de signaux codés à transmettre, et actionne le commutateur 11 de manière que l'entrée e2 soit connectée à la ligne de sortie 13. Les horloges H1 et H2 n'étant pas synchronisées, le début effectif de lecture de l'échantillon Si dans la mémoire 10 se trouve décalé d'un intervalle dt variable. Ce décalage est de une ou plusieurs demi-périodes de l'horloge H2. L'intervalle T est suffisant pour que la transmission de l'échantillon codé par le boitier Bi soit terminée avant que l'ordre de transmission pour le boitier suivant soit effectivement pris en compte.

Avec la méthode de transmission définie ci-dessus, il n'est pas nécessaire que l'ensemble de transmission dans chaque boitier détecte le contenu des données circulant sur la voie de transmission V2 pour repérer au bit près, les instants où il faut placer les mots numériques mémorisés. Cette latitude de décalage laissée à chaque ensemble de transmission de boitier, permet de limiter le nombre d'éléments électroniques, qui, dans chaque boitier Bi, doivent fonctionner à la fréquence d'horloge la plus haute H2. Il s'agit en l'occurrence de la partie lecture de l'électronique de la mémoire 10, du commutateur 11 et de l'élément 12 extrayant l'horloge H2. Ceci a une incidence importante sur les coûts de fabrication, d'autant plus que le nombre de boitiers électroniques des flûtes sismiques les plus récentes est souvent très grand.

La méthode a été décrite appliquée à un système de transmission sismique. Il est bien évident que, sans sortir du cadre de l'invention tel qu'il est défini par les revendications, on pourra l'adapter à tout système de transmission à grand débit.

## Revendications

1. Méthode de transmission à grand débit vers un même poste central (2) de données numérisées provenant d'une pluralité d'appareils d'acquisition de signaux (A1...Ai...An) et connectés à celui-ci par au moins une première voie (V1) de transmission de signaux de contrôle et au moins une seconde voie (V2) de transmission de données à débit de transmission plus élevé que celle de ladite première voie, applicable par exemple pour la réalisation d'un système de transmission sismique, dans laquelle on utilise au moins un code de transmission tel que les signaux de contrôle et les données transmises sont superposées respectivement à un premier signal d'horloge et à un second signal d'horloge de fréquence plus élevée que celle du premier signal d'horloge, l'acquisition et la mémorisation des données étant effectuées en accord avec le premier signal d'horloge, la méthode étant caractérisée en ce qu'elle comporte l'allocation sélective à chaque appareil d'acquisition (Ai), d'un intervalle de temps de transmission de durée déterminée (T), et l'émission permanente du signal d'horloge (H2) à fréquence élevée sur ladite seconde voie (V2) de transmission de données, chacune des transmissions effectuées comportant successivement
- l'adressage en séquence à tous les appareils d'acquisition de signaux de contrôle indicatifs chacun de l'instant (t1...tn) de début de l'intervalle de transmission (T) attribué respectivement à chaque appareil d'acquisition, et
- à la réception du signal de contrôle qui lui correspond, la lecture d'une donnée mémorisée en synchronisme avec le second signal d'horloge (H2) et sa transmission sur ladite voie de transmission de données à partir d'un instant compatible avec le signal d'horloge (H2) utilisée pour sa lecture.

2. Méthode selon la revendication 1, caractérisée en ce qu'elle comporte l'application des données sur une seconde voie de transmission réalisée au moyen de fibres optiques.

3. Dispositif pour la mise en oeuvre de la méthode selon la revendication 1, permettant de transmettre à grand débit des données numérisées entre une pluralité d'appareils d'acquisition de données adaptés chacun à collecter, échantillonner, numériser, mémoriser des signaux, et à les coder en accord avec un signal de référence et un même poste central pourvu de moyens pour engendrer des signaux de contrôle codés en fonction d'un premier signal d'horloge (H1) et adressables sélectivement aux différents appareils d'acquisition, lesquels sont connectés au poste central par un ensemble de liaison commun comportant au moins une première voie de transmission (V1) desdits signaux de contrôle et au moins une seconde voie de transmission (V2) à débit de transmission plus élevé que celui de la première voie, qui est reliée à des moyens d'émission d'un second signal d'horloge, caractérisé en ce qu'il comporte une pluralité d'ensembles de transmission (TRi) associés respectivement auxdits appareils d'acquisition (Ai), et comportant chacun
- des moyens (12) de restitution en permanence du second signal d'horloge (H2) émis sur la seconde voie (V2),
- des moyens de décodage (6,7) sur la première voie (V1) des signaux de contrôle spécifiques indiquant le début (ti) de l'intervalle de temps (T) déterminé affecté à l'appareil d'acquisition (Ai) correspondant pour l'émission des signaux mémorisés, et
- des moyens d'émission (10,11) desdits signaux mémorisés en synchronisme avec le second signal d'horloge (H2) issu des moyens de restitution (12), durant ledit intervalle de temps déterminé.

4. Dispositif selon la revendication 3, caractérisé en ce que la seconde voie de transmission (V2) est une fibre optique connectée à chaque ensemble de transmission par des moyens de conversion électrique/optique (4, 5).

5. Dispositif selon la revendication 3 ou 4, caractérisé en ce que chaque ensemble de transmission comporte un ensemble logique de commande (8) adapté à contrôler l'acquisition des données en synchronisme avec le premier signal d'horloge (H1), un organe de mémorisation (10) des signaux issus de l'appareil d'acquisition correspondant, et les moyens d'émission comportent des moyens de lecture de l'organe de mémorisation (10) en synchronisme avec le second signal d'horloge (H2) et des moyens de commutation (11) commandés par l'ensemble logique de commande (8), pour connecter par intermittence ledit organe de mémorisation (10) à la seconde voie de transmission (V2).

6. Dispositif selon la revendication 5, caractérisé en ce que l'ensemble de transmission associé à chaque appareil d'acquisition comporte un élément de codage (9) pour appliquer aux signaux à transmettre un code particulier de transmission (CMI3).

7. Dispositif selon l'une des revendications 3 à 6, caractérisé en ce que l'organe de mémorisation (10) comporte une mémoire du type FIFO.

## Patentansprüche

1. Verfahren zur Übertragung von digitalisierten Daten bei großer Menge hin zu einer gleichen zentralen Station (2), die aus einer Vielzahl von Einrichtungen zur Erfassung von Signalen (A1...Ai...An) stammen und mit diesen durch wenigstens einen ersten Weg (V1) zur Übertragung von Kontroll- bzw. Steuerungs- bzw. Regelungssignalen und wenigstens einen zweiten Weg (V2) zur Übertragung von Daten mit zu derjenigen der ersten Leitung größerer Übertragungsmenge verbunden ist, verwendbar zum Beispiel für die Realisierung eines seismischen Übertragungssystems, bei welchem mindestens ein Übertragungscode verwendet wird so wie die übertragenen Kontroll- bzw. Steuerungs- bzw. Regelungssignale und Daten entsprechend einem ersten Taktsignal und einem zweiten Taktsignal mit zu derjenigen des ersten Taktsignals höherer Frequenz übereinandergelegt werden, wobei die Erfassung und Speicherung der Daten in Übereinstimmung mit dem ersten Taktsignal bewirkt werden, dadurch gekennzeichnet, daß das Verfahren die selektive Unterstützung mit jeder Erfassungseinrichtung (Ai) von einem Übertragungszeitintervall
(T) von bestimmter Dauer und die ständige Aussendung des Taktsignals (H2) mit höherer Frequenz auf dem zweiten Weg (V2) zur Übertragung von Daten umfaßt, wobei jede der durchgeführten Übertragungen aufeinanderfolgend
- die sequentielle Adressierung jeder der Einrichtungen zur Erfassung der Kontroll- bzw. Steuerungs- bzw. Regelungssignale, jeden Anfangszeitpunkt (t1...tn) des Übertragungszeitintervalls (T), der jeder Erfassungseinrichtung entsprechend zugewiesen ist, anzeigend, und
- bei Empfang des Kontroll- bzw. Steuerungs- bzw. Regelungssignals, das zu diesem korrespondiert, das Lesen einer gespeicherten Datenangabe synchron mit dem zweiten Taktsignal (H2) und ihrer Übertragung über den Weg zur Übertragung von Daten von einem mit dem Taktsignal (H2) kompatiblen Zeitpunkt an, welche zu ihrem Lesen verwendet wird,
umfaßt.

2. Verfahren nach Anspruch 1, dadurch gekennzeichnet, daß es die Anwendung der Daten über den zweiten Übertragungsweg, der mittels Lichtleitfasern realisiert ist, umfaßt.

3. Vorrichtung zur Durchführung des Verfahrens nach Anspruch 1, die gestattet, digitalisierte Daten zwischen einer Vielzahl von Einrichtungen zur Erfassung von Daten, welche jeweils geeignet sind, Signale zu erfassen, zu bemustern bzw. von diesen Momentwerte zu bilden, zu digitalisieren, zu speichern und in Übereinstimmung mit einem Bezugssignal zu codieren, und einer gleichen zentralen Station, welche mit Einrichtungen zur Erzeugung von in Abhängigkeit eines ersten Taktsignals (H1) codierten und an verschiedene Erfassungseinrichtungen selektiv adressierbaren Kontroll- bzw. Steuerungs- bzw. Regelungssignalen versehen ist, bei großer Menge zu übertragen, wobei diejenigen mit der zentralen Station über eine gemeinsame Verbindungseinheit verbunden sind, die wenigstens einen ersten Weg (V1) zur Übertragung der Kontroll- bzw. Steuerungs- bzw. Regelungssignale und wenigstens einen zweiten Weg (V2) zur Übertragung mit zu derjenigen des ersten Weges größerer Übertragungsmenge, welcher mit einer Einrichtung zur Aussendung eines zweiten Taktsignals verbunden ist, umfaßt, dadurch gekennzeichnet, daß sie eine Vielzahl von Übertragungseinheiten (TRi) umfaßt, die den Erfassungseinrichtungen (Ai) entsprechend zugeordnet sind und jeweils
- eine Einrichtung (12) zur ständigen Wiederherstellung des über den zweiten Weg (V2) ausgesendeten, zweiten Taktsignals (H2),
- Einrichtungen (6, 7) auf dem ersten Weg (V1) zum Decodieren von spezifischen Kontroll- bzw. Steuerungs- bzw. Regelungssignalen, die den bestimmten, der Erfassungseinrichtung (Ai) zugeordneten und zur Aussendung der gespeicherten Signale korrespondierenden Anfang (ti) des Zeitintervalls (T) anzeigen, und
- Einrichtungen (10, 11) zur Aussendung der gespeicherten Signale synchron mit dem von der Wiederherstellungseinrichtung (12) stammenden, zweiten Taktsignal (H2) während des bestimmten Zeitintervalls,
umfassen.

4. Vorrichtung nach Anspruch 3, dadurch gekennzeichnet, daß der zweite Übertragungsweg (V2) eine Lichtleitfaser ist, die mit jeder Übertragungseinheit über elektrisch/optische Umwandlungseinrichtungen (4, 5) verbunden ist.

5. Vorrichtung nach Anspruch 3 oder 4, dadurch gekennzeichnet, daß jede Übertragungseinheit eine Logiksteuerungseinheit bzw. Verknüpfungssteuerungseinheit (8), welche geeignet ist, die Erfassung der Daten synchron mit dem ersten Taktsignal (H1) zu kontrollieren bzw. zu steuern bzw. zu regeln, ein Element (10) zur Speicherung der aus der korrespondierenden Erfassungseinrichtung stammenden Signale und die Aussendungseinrichtungen, welche eine Einrichtung zum Lesen des Speicherungselements (10) synchron mit dem zweiten Taktsignal (H2) sowie eine von der Logiksteuerungseinheit bzw. Verknüfungssteuerungseinheit (8) betätigte Schaltereinrichtung (11) aufweisen, um das Speicherungselement (10) durch Unterbrechung mit dem zweiten Übertragungsweg (V2) zu verbinden, umfaßt.

6. Vorrichtung nach Anspruch 5, dadurch gekennzeichnet, daß die Übertragungseinheit, die jeder Erfassungseinrichtung zugeordnet ist, ein Codierelement (9) umfaßt, um an die zu übertragenden Signale einen speziellen Übertragungscode (CM13) anzulegen.

7. Vorrichtung nach einem der Ansprüche 3 bis 6, dadurch gekennzeichnet, daß das Speicherungselement (10) einen Speicher vom Typ FIFO umfaßt.

## Claims

1. A method of high rate transmission to a same central station (2) of digitised data from a plurality of signal acquisition devices (A1...Ai...An) connected to this station by at least a first channel (V1) for transmitting control signals and at least a second channel (V2) for transmitting data at a higher rate than that of the first channel, applicable, for example, to the installation of a seismic transmission system, in which at least one transmission code is used, wherein the control signals and transmission data are superposed respectively on a first time signal and a second time signal of a much higher frequency than that of the first time signal, the acquisition and storage in memory of the data being effected in conjunction with the first time signal, the method being characterised in that it consists in selectively allocating to each acquisition device (Ai) a transmission time interval of a given duration (t), and permanent emission of the time signal (H2) at high frequency on this second data transmission channel (V2), each of the transmission sequences consisting in
- addressing in sequence to all the acquisition devices control signals each indicating the instant (t1...tn) of the start of the transmission interval (T) allocated respectively to each acquisition device, and
- on reception of the corresponding control signal, reading a memorised datum in synchronisation with the second time signal (H2) and transmitting it on the data transmission channel starting at an instant compatible with the time signal (H2) used for reading it.

2. A method in accordance with claim 1, characterised in that it consists in applying the data to a second transmission channel made from optical fibres.

3. A device for implementing the method of the invention as claimed in 1, allowing digitised data to be transmitted at a high rate between a plurality of data acquisition devices each programmed to capture, sample, digitise and memorise the signals, and code them in accord with a reference signal, and a same central station equipped with means for generating coded control signals that coincide with a first time signal (H1) and that can be selectively addressed to the various acquisition devices, which are connected to the central station by a common connecting unit having at least a first transmission channel (V1) for the control signals and at least a second transmission channel (V2) with a higher transmission rate than that of the first channel, which is connected to means for transmitting a second time signal, characterised in that it comprises a plurality of transmission units (TRi) connected respectively to these acquisition devices (Ai), and each having
- means 12 for permanently retrieving the second time signal (H2) transmitted on the second channel (V2),
- means (6, 7) on the first channel (V1) for decoding specific control signals indicating the start (ti) of the given time interval (T) allocated to the corresponding acquisition device (Ai) for transmitting memorised signals, and
- means for transmitting (10, 11) the memorised signals in synchronisation with the second time signal (H2) emitted by the restoration means (12) during the given time interval.

4. Device in accordance with claim 3, characterised in that the second transmission channel (V2) is an optical fibre connected to each transmission unit by electrical/optical conversion means (4, 5).

5. A device in accordance with claim 3 or 4, characterised in that each transmission unit has a logic command unit (8) programmed to control the acquisition of data in synchronisation with the first time signal (H1), a memory unit (10) for signals emitted by the corresponding acquisition device, transmission means having means for reading the memory unit (10) in synchronisation with the second time signal (H2) and switching means (11) controlled by the logic command unit (8) to connect the memory unit (10) intermittently to the second transmission channel (V2).

6. A device in accordance with claim 5, characterised in that this transmission unit connected to each acquisition device has a coding element (9) for applying a specific transmission code (CMI3) to the signals.

7. A device in accordance with one of claims 3 to 6, characterised in that the memory unit (10) has a memory of the FIFO type.
